(19) Europäisches Patentamt / European Patent Office / Office européen des brevets

(11) **EP 4 027 220 A1**

(12) **EUROPEAN PATENT APPLICATION**

(43) Date of publication:
**13.07.2022 Bulletin 2022/28**

(21) Application number: **21150732.2**

(22) Date of filing: **08.01.2021**

(51) International Patent Classification (IPC):
*G06F 3/01* (2006.01)

(52) Cooperative Patent Classification (CPC):
**G06F 3/013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Eyeware Tech SA**
**1920 Martigny (CH)**

(72) Inventors:
• **Funes Mora, Kenneth Alberto**
**1018 Lausanne (CH)**

• **Sawatzky, Johann**
**6340 Baar (CH)**

(74) Representative: **P&TS SA (AG, Ltd.)**
**Avenue J.-J. Rousseau 4**
**P.O. Box 2848**
**2001 Neuchâtel (CH)**

Remarks:
Claims 16,17,18,19,20,21 are deemed to be abandoned due to non-payment of the claims fees (Rule 45(3) EPC).

(54) **METHOD FOR CALIBRATING AN EYE-TRACKING DEVICE**

(57) The invention relates to a method for calibrating a system (10) comprising an external eye tracking device (16) and a computing device (12a; 12b; 12c) for capturing the gaze of a user (P) on the screen (13) of the computing device in real-time. The calibration of the system (10) comprises: retrieving at least one gaze estimate (g) of at least one eye of the user from the eye tracking device (16); retrieving the corresponding point-of-regard (s) on the screen of the computing device as a 2d pixel coordinate (s) on the screen, and computing the 3d pose of the screen of the computing device, defined as the screen coordinate system (SCS), as a function of the at least one gaze estimate (g) and its corresponding point-of-regard on the screen (s) and mechanical parameters describing the resolution and geometry of the screen of the computing device. Capturing the gaze of a user (P) on the screen of the computing device in real-time comprises: retrieving a gaze ray (d) of the user (P) with the eye-tracking device defined in the coordinate system (ECS) of said eye tracking device, and intersecting the gaze ray (d) of the user (P) with the screen of the computing device, as a function of the ECS and SCS parameters, to capture the gaze-on-screen in real-time.

**Fig. 1**

EP 4 027 220 A1

## Description

### Field of the invention

The present invention relates to a method for calibrating an eye-tracking device with the screen of a computing device.

### Description of related art

Eye tracking has been solved by making use of multiple strategies. An eye tracking setup is generally composed of one or multiple cameras that capture the face and/or eyes and, in most common applications, with one or multiple screens such as a laptop screen or desktop screen. Most systems require to know what the positioning of the physical screens is with respect to the eye-tracking device configured to track the movement of the eyes of a user.

This can be problematic because the screens themselves are not in the field of view of the one or more cameras, making it difficult to infer automatically where the screens are with respect to the cameras. To solve this problem, commercial eye tracking solutions employ different mechanisms. Some systems have the eye tracking device and the screen built-in together and therefore their relative pose is known through the fabrication process. Other systems use an external eye tracker and mounting mechanism that clips onto the screen in only one way, thus minimizing the pose ambiguity for the eye tracking software. Some of the latter systems still give some freedom on device placement to the user but only granting flexibility on some of the degrees of freedom. Finally, many systems introduce user interface (UI) or user experience (UX) strategies that guide the user on how to mount the eye-tracking device on each of the screens as well as querying for missing information from the user. Many systems are restricted to using one eye-tracking device per screen.

The above solutions are tedious procedures to put in place which require complicated setups of an eye-tracking device with respect to the screen of the computing device, in particular, when a freely positioning of the eye-tracking device is desirable.

There is therefore a need for a simple calibration of the eye-tracking device with respect to the screen of the computing device.

Automated calibration methods between an eye-tracking device and a camera already exist.

For example, US 2020174560 discloses a calibration method for a three-dimensional augmented reality and apparatus thereof. The calibration method includes determining a first conversion parameter representing a relationship between a coordinate system of an eye-tracking camera and a coordinate system of a calibration camera by capturing a physical pattern using the eye-tracking camera and the calibration camera, and determining a second conversion parameter representing a relationship between a coordinate system of a virtual screen and the coordinate system of the calibration camera and a size parameter representing a size of the virtual screen by capturing a virtual pattern displayed on the virtual screen using the calibration camera.

The method according to US2020174560 therefore enables to accurately display a virtual object on a virtual screen at a point corresponding to a target position which intersects the gaze vector ray of the user tracked by the eye-tracking camera.

### Brief summary of the invention

An aim of the present invention is to provide a new method for capturing by an eye-tracking device the gaze of a user on the screen of the computing device irrespective of the position of the eye-tracking device with respect to the computing device.

Another aim of the present invention is to provide a method for a quick calibration of a system comprising an eye-tracking device and a computing device.

According to the invention, these aims are achieved by means of a method for calibrating a system comprising an external eye tracking device and a computing device for capturing the gaze of a user on the screen of the computing device in real-time. The calibration of the system comprises: retrieving at least one gaze estimate of at least one eye of the user from the eye tracking device; retrieving the corresponding point-of-regard on the screen of the computing device as a 2d pixel coordinate on the screen, and computing the 3d pose of the screen of the computing device, defined as the screen coordinate system (SCS), as a function of the at least one gaze estimate and its corresponding point-of-regard on the screen and mechanical parameters describing the resolution and geometry of the screen of the computing device. Capturing the gaze of a user on the screen of the computing device in real-time comprises: retrieving a gaze ray of the user with the eye-tracking device defined in the coordinate system (ECS) of said eye tracking device, and intersecting the gaze ray of the user with the screen of the computing device, as a function of the ECS and SCS parameters, to capture the gaze-on-screen in real-time.

In an embodiment, the retrieved at least one gaze estimate is a 3d ray defined in the coordinate system (ECS) of the eye tracking device and said gaze ray is computed as an affine transform of said retrieved at least one gaze estimate.

In an embodiment, computing the 3d pose of the screen of the computing device (SCS), further comprises the step of computing additional person-specific calibration parameters for a function that maps from a gaze estimate into a gaze ray for the user.

In an embodiment, the retrieved at least one gaze estimate are gaze angles describing the eyeball rotation referred to the coordinate system (HCS) of the head of the user, and whereas mapping the at least one gaze estimate into a gaze ray comprises the steps of:

i) applying an affine transform from the gaze estimate into corrected gaze angles, whereas the affine transform is parameterized by the person-specific calibration parameters;

ii) transforming the corrected gaze angles into a gaze vector;

iii) combining the gaze vector with the gaze origin point to define a gaze ray in the coordinate system of the head of the user;

iv) applying to the gaze ray in the coordinate system (HCS) the rigid transform given by the corresponding head pose of the user, to obtain the gaze ray defined in the coordinate system (ECS) of the eye tracking device.

In an embodiment, computing the person-specific calibration parameters, also comprises the steps:

retrieving at least one other gaze estimate of at least one eye of the user from the eye tracking device, retrieving a corresponding 3d point-of-regard in the coordinate system (ECS) of said eye tracking device, without depending on knowing the 3d pose of the screen of the computing device (SCS).

In an embodiment, retrieving at least one other gaze estimate and its corresponding point-of-regard in the coordinate system (ECS) of the eye tracking device, comprises the step of looking at points on the eye tracking device.

In an embodiment, the process of retrieving at least one other gaze estimate and its corresponding point-of-regard in the coordinate system (ECS) of the eye tracking device, comprises the user looking at points on additional screens whose 3d pose in relation to the eye tracking device are known.

In an embodiment, computing the 3d pose of the screen of the computing device, defined as the screen coordinate system (SCS), is also a function of an initial guess on the screen coordinate system.

In an embodiment, computing the 3d pose of the screen of the computing device, defined as the screen coordinate system (SCS), is an iterative process in which the screen coordinate system (SCS) parameters are initialized by the initial guess on the screen coordinate system.

In an embodiment, computing the 3d pose of the screen of the computing device, defined as the screen coordinate system (SCS), further includes a constraint in which the resulting screen coordinate system (SCS) is enforced to be numerically similar to the initial guess on the screen coordinate system.

In an embodiment, defining the initial guess on the screen coordinate system is established in connection to guidance provided to the user on how to position the eye tracking device with respect to the screen of the computing device.

In an embodiment, defining the initial guess on the screen coordinate system is established based on hints provided by the user through a user interface which indicates how the user has positioned the eye tracking device in relation to the screen of the computing device.

In an embodiment, defining the initial guess on the screen coordinate system is further established from positional data retrieved from an inertial measurement unit (IMU).

In an embodiment, defining the initial guess on the screen coordinate system is further established based on face, head or body pose tracking data, and assuming that screens are oriented in the same orientation as detected faces.

In an embodiment, defining the initial guess on the screen coordinate system is further established from a displays layout retrieved from an operating system in multi-screen setups.

In an embodiment, retrieving the at least one gaze estimate and a corresponding point-of-regard in the coordinate system (ECS) of the eye tracking device, comprises the step of guiding the user into moving the head as to retrieve a diverse set of gaze estimate and point-of-regard pairs.

In an embodiment, retrieving the corresponding point-of-regard on the screen of the computing device as a 2d pixel coordinate on the screen, is done in a semi-supervised or unsupervised manner.

In an embodiment, retrieving the corresponding point-of-regard on the screen of the computing device as a 2d pixel coordinate on the screen, makes use of mouse clicks and other interactive events to establish a screen point to be the point-of-regard on the screen.

In an embodiment, retrieving the corresponding point-of-regard on the screen of the computing device as a 2d pixel coordinate on the screen, makes use of display content to establish a screen points that are likely to be the point-of-regard on the screen, in the form of visual saliency maps.

In an embodiment, the eye tracking device is a mobile phone.

Another aspect of the invention relates a tangible computer product containing program code for causing a processor to execute the method as described above when said code is executed on said processor.

**Brief Description of the Drawings**

The invention will be better understood with the aid of the description of several embodiments given by way of examples and illustrated by the figures, in which:

Fig. 1 shows a schematic view of a system comprising a laptop computer and a mobile phone as an eye-tracking device according to an embodiment of the present invention,

Fig. 2 shows a schematic view of a system comprising a desktop computer, a mobile phone as an eye-tracking device and a remote server in communication with the desktop computer,

Fig. 3 shows a schematic view of a system comprising a laptop computer, an external display and a mobile phone as an eye-tracking device according to another embodiment of the present invention,

Fig. 4 shows a schematic view of a screen displaying an attention cue to capture the fixated point-of-regard according to an embodiment of the present invention,

Fig. 5 is a flowchart that illustrates the steps of calibrating the 3d pose of the screen of the computing device and the gaze calibration parameters according to an embodiment of the present invention,

Fig. 6 is a flowchart that illustrates the steps of capturing the gaze of the user on the screen of the computing device in real-time according to an embodiment of the present invention,

Fig. 7 shows a schematic view of the gaze estimate g retrieved as eye-in-head angles and transformed into a gaze ray d' referred to the head coordinate system HCS according to an embodiment of the present invention, and

Fig. 8 shows a schematic view of a system comprising a desktop computer, an external camera and computing device and a remote server in communication with the desktop computer.

**Detailed Description of possible embodiments of the Invention**

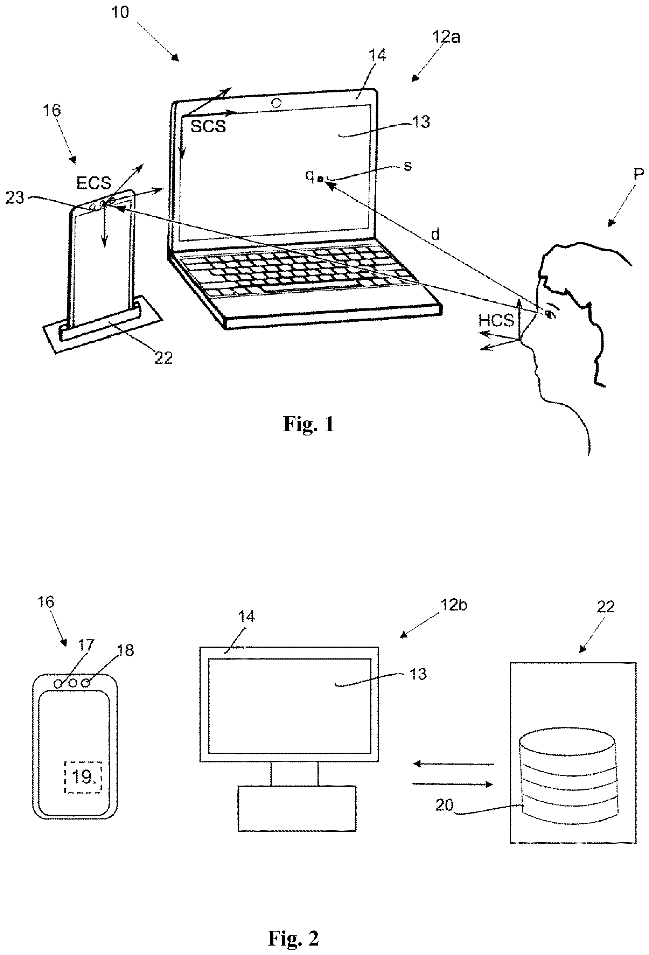

Figures 1 and 2 schematically show an example of a system 10 comprising a computing device 12a, 12b and an eye-tracking device 16. The computing device may be for example a laptop computer 12a, a desktop computer 12b, a gaming console connected to a display (not shown), a smart tv (not shown), a cloud-based system controlling a local display (not shown), or a tablet computer (not shown).

The tracking device 16 is preferably a mobile device such as a smartphone. In a preferred embodiment, the smartphone 16 comprises an RGB camera 17 as well as a depth-sensing camera 18 such as the TrueDepth® camera of the IPhone®. In another embodiment, the device comprises one or multiple infrared cameras as an alternative or complementary to the RGB camera. Such infrared data may also be the amplitude data from time-of-flight sensors. In another non-illustrated embodiment, the mobile device 16 may comprise dual or multiple cameras, without any depth-sensing camera, that can together work as a depth sensor through stereo triangulation. Cameras of one or different types could indeed be mixed. The resolution, type and focal of different cameras may vary.

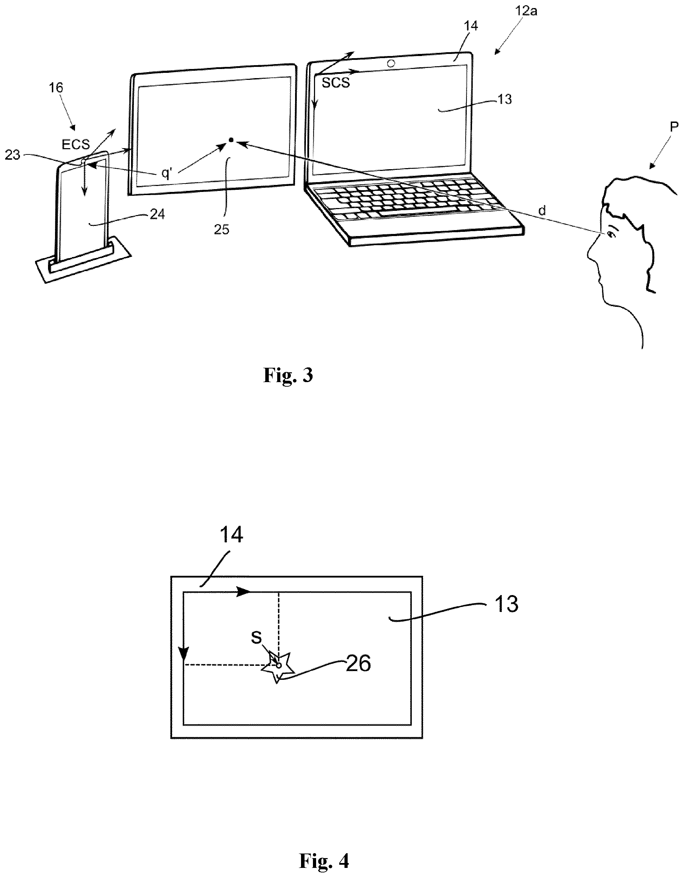

Figure 4 schematically shows an example of a system 10 capturing the point-of-regard on the screen 13, by means of displaying an attention cue 26, drawn at coordinates s, that the user P is meant to look at. In one embodiment, the user explicitly confirms when he/she is looking at the attention cue 26 through a user interface by means of monitoring keyboard strokes or mouse clicks.

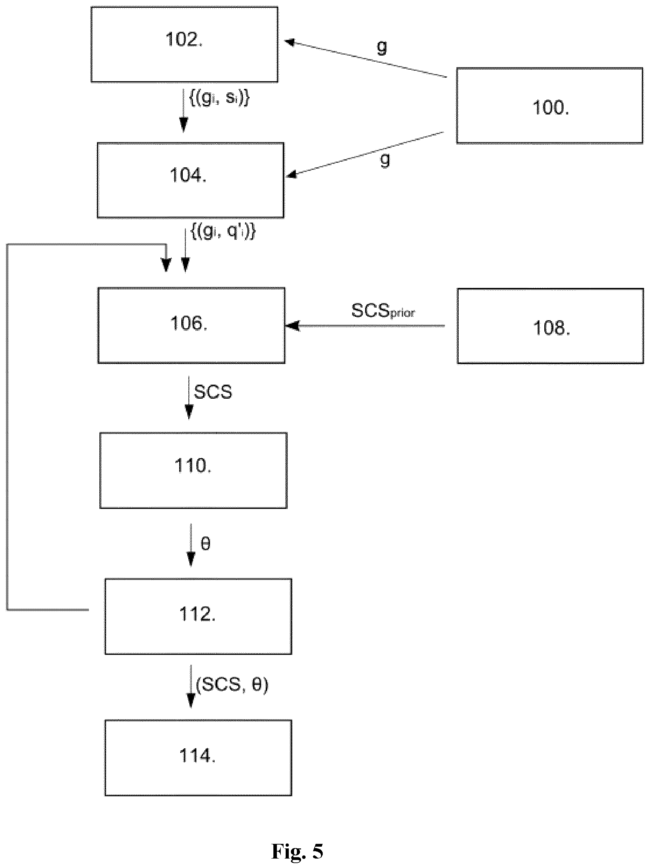

Figure 5 is a flowchart that illustrates the different steps for computing the pose of the screen of the computing device (SCS), allowing to capturing the gaze of the user on the screen 13 of the computing device 12a, 12bin real-time according to an embodiment of the present invention.

During step 100, the gaze estimate g of the user P is retrieved by the eye-tracking device 16. The gaze estimate g of the user may be obtained by different methods. For example, the gaze of the user may be acquired by retrieving an input image and a reference image of an eye of the user and processing the input image and the reference image to estimate a gaze difference between the gaze of the eye within the input image and the gaze of the eye within the reference image. The gaze of the user is retrieved using the estimated gaze difference and the known gaze of the reference image. This procedure is disclosed in detail in WO2020/044180, the content of which is hereby incorporated by reference. In another example, the gaze of the user may be acquired by comparing an image geometric model with at least one image segmentation map generated from one input image observation corresponding to an image of the user's eye and iteratively modifying at least one parameter in the set of geometric parameters of the image geometric model to generate a new image geometric model of a user's eye until a model correspondence value reaches the optimal value. This procedure is disclosed in detail in WO2020/208494, the content of which is hereby incorporated by reference. Other methods for gaze estimation are disclosed in detail for example in WO2014/146199 and WO2015/192879. Yet other methods, such as those based on pupil-centre-corneal-reflection (PCCR) may also be suitable to retrieve the gaze estimate g, preferably if provided as a 3d ray.

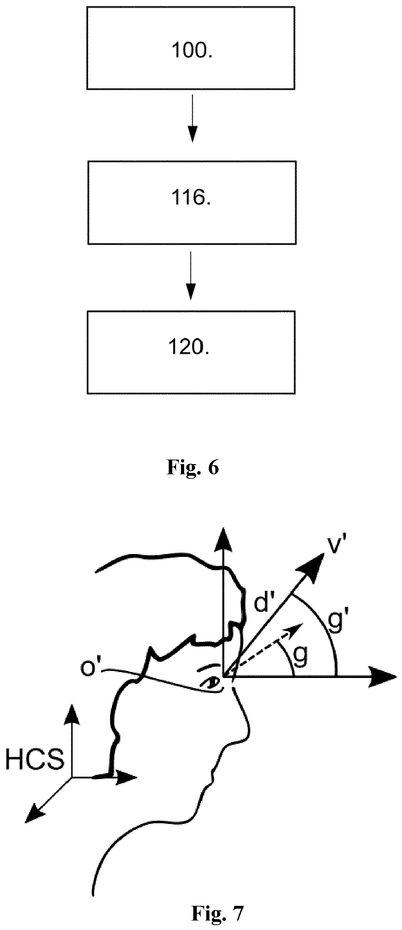

The gaze estimate g may therefore be modelled in different ways, depending on the gaze estimation principle or the specific eye tracking device. In one embodiment, the gaze estimate g is directly a 3d ray representing the line-of-sight of the user with respect to the eye tracker coordinate system (ECS). In another embodiment, the gaze estimate g are gaze angles describing the eyeball rotation referred to the coordinate system (HCS) of the head of the user, referred to, hereafter, as the "eye-in-head gaze angles", as illustrated in Figure 7. In an alternative embodiment, the gaze estimate g is a differential gaze angle as in WO2020/044180. In yet another embodiment, the gaze estimate g does not define a semantic interpretation and is instead a feature vector, preferably of low dimensionality, as it could be output by an artificial neural network mapping from the input video feed (RGB, RGB-D, Infrared, etc.) which may or may not be pre-processed into preferable regions of interest, before mapping to the gaze estimate.

It should be noted that the gaze estimate g of the user may be constantly tracked by the eye-tracking 16 while steps 102 to 104 described below are performed.

During step 102, at least one point-of-regard s in pixel coordinates of the screen of the computing device is captured at a time instant in which it is assumed that the user is indeed looking at point S on the screen. The gaze estimate g for the same time instant is stored together with the point-of-regard point s to create a calibration pair. Preferably, more than one pair of point-of-regard s and gaze estimate g are retrieved. In one embodiment this process is implemented through a user interface similar to the classical "N" point eye calibration procedures (N being, eg. 3, 5, 9, etc.) of standard eye tracking devices.

During the optional step 104, at least one point-of-regard q', as shown in Figure 3, modelled as a 3-dimensional point with regards to the eye tracker coordinate system (ECS), is captured at a time instant in which it is assumed that the user is indeed looking at q'. The gaze estimate g for the same time instant is stored together with the point-of-regard q'. In an embodiment, this process is implemented through a user interface guiding the user on which additional points to look at. In another embodiment, step 104 may be ignored and the only calibration data retrieved is the one of step 102.

During the optional step 108, an initial guess for the coordinate system $SCS_{prior}$ is established.

During step 106, the coordinate system SCS, i.e. the 3D pose of the screen 13 of the computing device 12a, 12b, 12c, is computed. In a preferred embodiment, the algorithm first establishes the current best estimate for the SCS parameters, as well as the current best estimate for the person-specific calibration parameters $\theta$. Given $\theta$, the current best estimate for the gaze ray d' is computed from gaze estimate g and, given SCS, the current best estimate for the 3d position of the points s are computed in 3d and referred to the ECS as s'. The screen pose can be then computed as the set of parameters SCS which minimizes the distance between gaze rays d' and their corresponding screen point s', i.e., a batch point-to-line cost.

During step 110, the person-specific calibration parameters $\theta$ are computed. In a preferred embodiment, the algorithm establishes the current best estimate for the SCS parameters. Given SCS, the current best estimate for the 3d position of the points s is computed in 3d and referred to the ECS, denoted as s' and paired with their corresponding gaze estimate. In addition, through step 104, another set of point-of-regard q, each with their corresponding gaze estimate g, may be available for this step. The person-specific calibration parameters $\theta$ can then be computed as the set of parameters $\theta$ which would generate the gaze rays d' from their corresponding gaze estimates g which minimizes the distance between gaze rays d' and their corresponding 3d point s' or 3d point q.

During step 112, a stopping criterion is evaluated to determine whether convergence has been achieved. For example, whether sufficient iterations have been executed, or whether the magnitude of the change in parameters SCS or $\theta$ is almost zero. If convergence has not been achieved, then the algorithm iterates back into step 106. If convergence has been achieved, then the algorithm proceeds to step 114.

During step 114, the final estimate for the parameters SCS and $\theta$ are recorded to be used for real-time gaze estimation on the screen of the computing device.

The mapping from the gaze estimate to the gaze ray d is dependent on the nature of the gaze estimate g.

In one embodiment, the gaze estimate g is directly the line-of-sight of the user as given by the eye tracking device. The mapping could therefore be a simple affine transform (with parameters $\theta$) of the gaze estimate g parameters into the gaze ray d parameters. The affine transform may simply be identity transform and therefore implying that the gaze ray d is directly the gaze estimate g.

In one embodiment, illustrated in Fig. 7, the gaze estimate g is the eye-in-head gaze angles. It has to be noted that typically 2 angles, pitch and yaw, are used to represent an eye-in-head orientation. For simplicity, Figure 7 shows only one of such angles as the face is drawn from a side view. In such case, mapping the gaze estimate g into a gaze ray d implies i) applying an affine transform from the gaze estimate g into corrected gaze angles g', whereas the affine transform is parameterized by the person-specific calibration parameters θ; ii) transforming the gaze angles g' into a gaze vector v'; iii) combining the gaze vector v' with the gaze origin point o' to define a gaze ray d' in the coordinate system (HCS) of the head of the user; iv) applying to the gaze ray d' the rigid transform given by the corresponding head pose of the user, to obtain the gaze ray d defined in the coordinate system (ECS) of the eye tracking device.

In one embodiment in which the gaze estimate is a non-semantic feature vector, the mapping to the gaze ray d may use a machine learning regression model, such as a neural network with weights θ, which regresses from the gaze estimate into eye-in-head gaze angles which can be transformed into a 3d gaze vector d using the current head pose, or regresses directly into the 3d gaze vector d in the ECS.

To compute the point-of-regard on the screen of the computing device as a 3d point referred to the ECS from the 2d pixel coordinate s, some mechanical parameters of the screen are also needed. These parameters establish a 3d model of the screen, such that, for a pixel coordinate s, the 3d point s" referred to the screen coordinate system SCS can be computed. For example, the screen resolution as well as the screen physical dimensions are needed to know the physical position of s within a 3D plane representing the screen. Some displays may also exhibit a curvature whose degree of curvature is also needed to know the exact mapping between a screen point in pixel coordinates and its 3d point within the SCS. Some displays may also have hinges allowing them to fold the screen, or other mechanisms to retract the display area. Input from sensors, sensing the hinge angle or how much the display is retracted, will also be needed to know the physical point corresponding to the screen pixel coordinate. Finally, to transform the point s" from the screen 3d model to the point s', i.e., in the ECS, it is then only needed to apply a 3-dimensional rigid transform to said point according to the SCS in relation to the ECS. This is a typical 3D rigid transform, ie. provided s" is the 3d point corresponding to s defined within the SCS, then transforming to ECS, requires rotation and translation matrices {R, T}, typically of dimensionality {3×3, 3×1}, to be applied according to:

$$s' = R \cdot s'' + T.$$

Generally, the point of regard in pixel coordinates s can be a random variable with by a probability distribution over either a few or all the points on the screen, representing the likelihood of said points to be looked at by the user at the given time. Single point coordinates can then be obtained from this distribution for example by taking the argmax or sampling. Subsequently, any method based on points of regard can be applied. Furthermore, points of regard represented by a probability distribution can be directly matched to gaze rays or probability distributions of gaze rays to estimate the screen pose.

In an embodiment, a UI comprising a menu and a figure is shown to the user. The figure shows a screen together with possible positions of the eye tracking devices. These positions comprise, for example, placing the eye tracking device above the screen, left from the screen, right from the screen and below the screen. The menu allows the user to choose the option from the figure which best suits how they are positioning the eye tracking device. From the given position, and screen geometry, it is then possible to set rough translation of the device and, potentially, a rotation if specified in the user interface.

In an embodiment, an IMU is used to estimate the orientation of the eye tracking device with respect to the gravitation. This information is used when estimating the parameters of the SCS. For example, this information requires the rotation of the SCS to be close to a set of parameters obtained from the orientation. Furthermore, additional movements of the eye tracking device taking place after the estimation of the SCS parameters can be measured. This permits an update of the SCS parameters without novel gaze estimates.

In one embodiment, instead of retrieving the point-of-regard on the screen of the computing device by means of an attention cue 26 and explicit confirmation through keyboard strokes or mouse clicks, eye movements are matched to patterns drawn on the screen following a specific geometric configuration. For example, drawing two screen attention cues on the left and right, and detecting a horizontal movement of the eye matching some geometric expectations, like angular change for a given distance. Said association may help to detect whether the user is looking at points on the screen without explicit confirmation. Note that eye movements can be detected, under certain error margin, for an uncalibrated system.

The user may then be informed that the calibration of the position of the eye-tracking device 16 has been completed and may be asked to confirm for example by clicking on "next" to launch the final optimization process in which the pose of the eye-tracking device with respect to the computer screen is computed as described later on. The system may have conducted optimizations prior to the final optimization process, in order to evaluate whether more data is needed, or as a mechanism to provide a pleasant user experience in which eye tracking is functional even before the "next" event is executed.

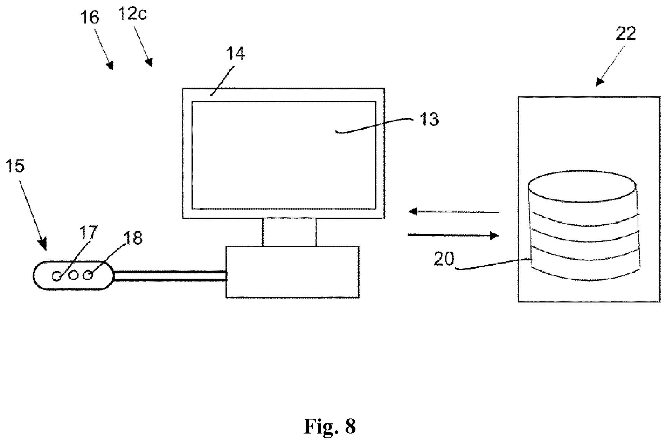

Figure 8 schematically shown an example of a system comprising a computing device 12c connected to an external camera 15 and a remote server 22 in communication with the desktop computer. In such system the camera delivers a video feed to the computing device over a communication channel that could be USB, Wifi, I2C, TCP, UDP, etc. The eye-tracking device 16 is implemented through software being executed on either the desktop computer or the remote server to deliver the gaze estimate g. In an embodiment, the external sensor may be an RGB camera 17, as well as a depth-sensing camera 18, such as the Intel® Realsense®. In another embodiment, the external sensor comprises one or multiple infrared cameras as an alternative or complementary to the RGB camera. Such infrared data may also be the amplitude data from time-of-flight sensors. In another embodiment, the sensor may comprise dual or multiple cameras, without any depth-sensing camera, that can together work as a depth sensor through stereo triangulation. Cameras of one or different types could indeed be mixed. The resolution, type and focal of different cameras may vary.

Figure 6 is a flowchart that illustrates the different steps for capturing the gaze of the user on the screen 13 of the computing device 12a, 12b, 12c in real-time after the pose of the screen of the computing device (SCS) and the person-specific calibration parameters θ have been computed.

During step 100, the gaze estimate g of the user P is retrieved by the eye-tracking device 16,

During step 116, the gaze ray d of the user P referred to the ECS is computed from the gaze estimate g according to the person-specific calibration parameters θ.

During step 120, the gaze ray d of the user P is intersected to the screen 13 as per the screen pose SCS and according to the screen 3d model (e.g. a 3 dimensional plane) parametrized by the mechanical parameters. The physical point on the screen can then be transformed into screen pixel coordinates according to the same model. In an embodiment in which the screen 3d model is a 3d plane, the process is as follows. Firstly, to represent a gaze ray, an algebraic representation can be used in which a 3D ray is composed by a 3D point representing the origin $O = (o_x, o_y, o_z)$ and a 3D vector defining a direction $V = (v_x, v_y, v_z)$. Both elements can be combined into a single parametric equation representing all 3d points contained by the ray as:

$$d(t) = O + t.V$$

where t is a free parameter which goes from 0 to infinite for gaze estimation applications.

Assume R and T are rotation and translation matrices representing the rigid transform mapping from the SCS to the ECS (i.e., the pose found by step 106). Then, the gaze ray retrieved in the ECS can be represented as $d_{ECS}(t) = O_{ECS} + t.V_{ECS}$. Said gaze ray is transform into the SCS, by applying $d_{scs}(t) = R^T (O_{ECS} - T) + t.R^T V_{ECS}$, and the intersection to the screen plane can be found by solving to find the $t$ in which $R^T (O_{ECS} - T) + t.R^T V_{ECS} = 0$, assuming that the screen plane is in the xy plane of the SCS reference frame.

In case the SCS is defined on the (0, 0) pixel coordinate, then transforming from screen physical coordinates to screen pixels or vice versa, is simply a process of dividing or multiplying by the physical size of a pixel (i.e, in metric units)

Many permutations of order of transforms may indeed be done to capture the gaze-on-screen in other embodiments. For example, referring both the gaze ray d and the screen plane to the global reference, and computing the line-to-plane intersection in said reference

The order of step 102 and step 104 of the calibration method, as shown in Figure 5, may be arbitrarily determined. For example, step 104 may be performed before step 102 or concurrently with step 102.

The order of step 106 and step 110 of the calibration method may be arbitrarily determined. For example, step 106 may be performed before step 110 or concurrently with step 110. One of the steps may also be skipped at a given iteration.

In an embodiment, the method searches for the transformation from the SCS to the ECS. In order to do so, it estimates a rotation R and a translation t which minimizes the distance between the estimated gaze rays and the calibration points on screen.

In an embodiment, to solve step 106, the following set of equations needs to be solved for all calibration points enumerated with i:

$$z_i = N_i(R.s''_i + T - o_i) = 0 \quad (1)$$

$$n = (n_x, n_y, n_z) = \frac{(v_x, v_y, v_z)}{\|v\|}$$

$N_i$: matrix which enables the cross product with the normalized gaze direction for calibration point number i in ECS

$s''_i$: 3d position of the calibration point number i in SCS

$o_i$: eyeball position for calibration point number i in ECS

$z_i$ are the vectors which are orthonormal to the plane containing the unitary gaze vector and the vector from the eyeball center to the calibration point on screen.

In an embodiment, equation (1) is solved by looking for R and T minimizing the Euclidean norm of the vectors $z_i$

In an embodiment, equation (1) is solved iteratively. Having an estimate for R and T, in each step, the following equation is first solved with respect to $R_\delta$, $T_\delta$

$$N_i\big((I + R_\delta)(R.s''_i + T) + T_\delta - o_i\big) = 0 \qquad (2)$$

where I is the 3-dimensional identity matrix. After this, the estimate for R and T is updated by the estimate for R and T is updated by

$$R_{new} = (I + R_\delta) * R \qquad (3)$$

$$T_{new} = (I + R_\delta)T + T_\delta \qquad (4)$$

The rotation matrix R_delta is approximated linearly:

$$R_{delta} = \begin{pmatrix} 0 & -\alpha & \beta \\ \alpha & 0 & -\gamma \\ -\beta & \gamma & 0 \end{pmatrix}$$

Instead of equation (2), equation (5) needs to be solved:

$$N_i(R_\delta(Rs''_i + T) + T_\delta) = N_i\big(o_i - (Rs''_i + T)\big) \qquad (5)$$

Which can be reformulated as a linear equation

$$A_i c = b_i \qquad (6)$$

with unknown c and known and $b_i$.

$$c = \big(\alpha, \beta, \gamma, t_{\delta,x}, t_{\delta,y}, t_{\delta,z},\big)$$

$$A_i = \begin{pmatrix} -n_z x & -n_y x & n_y y + n_z z \\ -n_z y & n_x x + n_z z & -n_x y \\ n_x x + n_y y & -n_y z & -n_x z \end{pmatrix}$$

$$(x, y, z) = (Rs''_i + T)$$

$$b_i = N_i\big(o_i - (Rs''_i + T)\big))$$

Accumulating the relationships given by equation (6) over all calibration points, the following overdetermined linear equation system can be obtained:

$$Ac = b \qquad (7)$$

In an embodiment, Equation (7) is solved for c using the least squares method. Alternative solution methods include alternative objective functions (e.g. L1-norm) as well as alternative solution methods (e.g. gradient descent methods, brute force approaches, genetic algorithms etc.)

In an embodiment, an initial guess on the screen coordinate system SCS may be available and denoted as $SCS_{prior}$ which is composed by a rotation matrix and translation matrix $R_{prior}$ and $T_{prior}$, respectively. In practice, multiple strategies exist to establish the values for $R_{prior}$ and $T_{prior}$.

In an embodiment, solving equation (1) iteratively can benefit from initializing the parameters by $R = R_{prior}$ and $T = T_{prior}$, i.e., the values of R and T at the first iteration (start of the algorithm) are set according to the initial guess. If $R_{prior}$ and $T_{prior}$ have been set with reasonable values, such initialization can help to prevent convergence to local minima.

In an embodiment, the initial guess on the screen coordinate system ($R_{prior}$ and $T_{prior}$) is used to regularize the solution c of equation (7). Assuming these are available, the system of linear equation (7) is augmented with the following regularization terms:

$$w_\alpha\left(\alpha - \alpha_{offset}\right) = 0$$

$$w_\beta\left(\beta - \beta_{offset}\right) = 0$$

$$w_\gamma\left(\gamma - \gamma_{offset}\right) = 0$$

$$w_y\left(T_{\delta,y} - T_{offset,y}\right) = 0$$

$$w_z\left(T_{\delta,z} - T_{offset,z}\right) = 0$$

where

$R_{offset} = R_{prior}R^T$ and ($\alpha_{offset}$, $\beta_{offset}$, $\gamma_{offset}$) are obtained from linearizing $R_{offset}$
and

$T_{offset} = T_{prior} - T$ So if the regularization is satisfied, the estimate for $R$ and $T$ will match the prior values. W is a hyper parameter enabling the weighting of the regularization.

In an embodiment, equations 1 to 7 can be reformulated in a probabilistic manner using graphical models or similar techniques to establish probabilistic relationships between the different random variables. In such formulations, different strategies are used to reach a maximum likelihood (ML) or maximum-a-posteriori solution (MAP), such as MCMC, gibbs sampling, analytical solutions, etc.

In an embodiment, to establish the priors $R_{prior}$ and $T_{prior}$, the user can be guided to place the eye tracking device to a certain position. For example, such a position would be "below the screen". In this example case, the user is required to place the eye tracking device so that its camera axis is roughly normal to the screen of the computing device, thus establishing that the tilt angle is close to zero. Additionally, the camera of the eye tracking device shall be located close to the plane of the screen, thus establishing that the depth translation is also close to zero. Additionally, the user is required to place the eye tracking device adjacent to the screen. To ensure these requirements, images showing correct and incorrect placements can be displayed. Such knowledge is indeed sufficient to set appropriate values for $R_{prior}$ and $T_{prior}$.

In another embodiment, $R_{prior}$ and $T_{prior}$ can be obtained by first letting the user place the eye tracking device at the location of their preference and then using a UI asking the user to indicate the position of the eye tracking device with respect to the screen of the computing device. Should the user indicate that the device is "on top of the screen". For example, then the algorithm can automatically set the appropriate values for $T_{prior}$.

In another embodiment, the eye-tracking device 16 may comprise an Inertial Measurement Unit (UMI) 19. These can be used to establish the orientation of the eye tracking device. Such orientation is directly linked, together with mechanical data about the eye tracking device, to the rotation of the eye tracking device with respect to the screen of the computing device, as it may be assumed that most screens are placed upright on a table (i.e. not upside-down). This can be used therefore to initialize $R_{prior}$.

In another embodiment, an assumption can be made that the user will be facing the screen of the computing with their face upright with respect to the screen. Therefore, should the eye tracker device detect the face in an unusual orientation, it can be assumed that the eye tracker device is oriented according to the inverse head rotation and therefore establish the appropriate $P_{prior}$.

In an embodiment, the user can place the eye tracking device within a certain range around the screen of the computing device. The direction of the camera of the eye tracking devices is also required to be in a certain range. Then, the user can indicate the position of the eye tracking device using user interface elements. The indicated position is animated and displayed to the user in a window for feedback.

In an embodiment, the computing device may be connected to multiple screens. In such setups, it is typical for the operating system to manage the relative positioning of screens that serves to establish the logical geometry of content between those screens, as well as to designate a single pixel coordinate system for the joint set of displays. Such information may be leveraged to also set appropriate $R_{prior}$ and $T_{prior}$. For example, in a setup in which one screen is already calibrated with respect to the eye tracking device, a second's screen approximate position may be computed from the position of the first one together with a translation given by the screen's physical dimensions and logical setup, that provides hints on whether the second screen is on the left, right, top or bottom from the first screen.

In an embodiment, it is assumed that the gaze estimate g are indeed the eye-in-head gaze angles ($yaw_i$, $pitch_i$) and the person-specific calibration parameters θ are simply an additive bias ($yaw_{bias}$, $pitch_{bias}$), as follows:

$$(yaw, pitch) = (yaw_{bias}, pitch_{bias}) + (yaw_i, pitch_i)$$

Such angles can be represented as a normalized gaze direction in the head coordinate system HCS as $n = (n_x, n_y, n_z)$ such that the gaze direction is given by = $(n_x, n_y, n_z)$ = $(cos(pitch)sin(yaw), sin(pitch), cos(pitch)sin(pitch))$

Generally, any of the equations (1), (2), (5), (7) can be optimized jointly for R, t, yaw_bias and pitch_bias. Therefore, in an embodiment, steps 106 and 110 could be solved jointly in a single step.

In an embodiment, instead of a simple bias on gaze angles, an affine transform could be used on the eye-in-head gaze angles in order to account for scaling or skewing, for example.

In an embodiment, to estimate the transformation between the SCS and the ECS jointly with the bias ($yaw_{bias}$, $pitch_{bias}$) the calibration points are subdivided into a train set and a validation set. Then, a grid search is performed over the values of ($yaw_{bias}$, $pitch_{bias}$).

For each hypothetical value of ($yaw_{bias}$, $pitch_{bias}$):

    1. solve equation (7) for points from the train set.

    2. using the obtained R and t, a screen position is estimated

    3. intersections points between the screen and the gaze rays from the validation set are obtained

    4. the distances between the intersections and the corresponding calibration points on the screen are calculated

    5. the average distance from step 4 is used as a metric to judge the quality of the solution

Finally, select those values for pitch_bias and yaw_bias, which gave the minimal average distance in step 5.

In an embodiment, step 110 that aims at finding the person-specific calibration parameters θ, makes uses of a neural network (convolution, deep, or any other variant) to process the gaze estimate g in person-adapted parameters, which can either be already the gaze ray d, or eye-in-head gaze angles.

In an embodiment, step 102 which establishes a point s in which the user is looking at, is instead a probability distribution over the pixels indicating the likelihood that a user looks at the given pixel. Such distribution can be obtained from different sources. Those sources comprise for example:

    1. mouse clicks, as there have been studies showing a correlation between gazing and the point where the user clicks.

    2. cursor position when text is typed

    3. Faces

    4. saliency maps obtained for images, videos or screen content. This content comprises faces and text in popup windows

5. interactive sessions showing visual content to the user and asking him to complete a questionnaire sheet indicating what the user was paying attention to.

The methods to obtain these probability maps comprise

1. heuristics prior distributions (e.g. one hot distributions or combinations of uniform distributions),

2. statistics collected from different users in advance,

3. statistics collected for the specific user during previous calibration sessions,

4. saliency models mapping novel visual content to person agnostic attention probability maps.

In an embodiment, the gaze direction in HCS for a particular frame can be modeled with a probability distribution $P_{g,i}$ which is parametrized by the user specific bias and the uncertainty of the system estimating the gaze direction. For a given screen pose, this probability distribution induces a probability distribution for the point of regard on the screen $P_{g,s,i}$. It can be obtained by calculating the intersection points of the rays from this distribution with the screen.

The methods using these distributions to jointly estimate the screen pose and the gaze bias comprise

1. Reduce the Kullback-Leibler divergence between $P_{g,i}$ and $P_{g,s,i}$ simultaneously for all points I

2. Taking the argmax values of $P_{a,i}$ and $P_{g,s,i}$ and reducing their Euclidean distance on the screen

3. Taking local argmax values of $P_{a,i}$ and $P_{g,s,i}$ and reducing the minimal Euclidean distance on the screen

4. Taking the argmax values of $P_{a,i}$ and $P_{g,i}$ and reducing the distance from the point on the screen to the ray

5. Taking the local argmax values of $P_{a,i}$ and $P_{g,i}$ and reducing the minimal distance from the point on the screen to the ray

6. Model the point of regard probability distribution as a pixelwise product $P_i = P_{a,i} P_{g,s,i}$ . . For a given $P_i$, take its argmax value as the point of regard. Maximize the likelihood for all these point of regards over the screen pose and the gaze bias

The methods also comprise RANSAC-style approaches. In such an approach, the optimal screen pose and gaze direction yield metric values surpassing certain thresholds for as many frames as possible. For example, for approach 1 above, the Kullback-Leibler divergence shall be smaller than a certain threshold in as many frames as possible.

Various modifications and variations to the described embodiments of the invention will be apparent to those skilled in the art without departing from the scope of the invention as defined in the appended claims. For example, the eye-tracking device may be a device other than a mobile phone such as a stand-alone eye-tracking device with its own processing unit and a communication protocol allowing to either share the landmarks points, or video data. Alternatively, the communication protocols are configured such that the camera feed of the computing device, as well as mechanical parameters of the screen and other needed information are sent over to the eye-tracking device, which internally makes the necessary calibration computations.

**Claims**

1. A method for calibrating a system (10) comprising an external eye tracking device (16) and a computing device (12a; 12b; 12c) for capturing the gaze of a user (P) on the screen (13) of the computing device in real-time, wherein the calibration of the system (10) comprises:

    retrieving at least one gaze estimate (g) of at least one eye of the user from the eye tracking device (16),
    retrieving the corresponding point-of-regard (s) on the screen of the computing device as a 2d pixel coordinate (s) on the screen;
    computing the 3d pose of the screen of the computing device, defined as the screen coordinate system (SCS), as a function of the at least one gaze estimate (g) and its corresponding point-of-regard on the screen (s) and mechanical parameters describing the resolution and geometry of the screen of the computing device, and

wherein, capturing the gaze of a user (P) on the screen of the computing device in real-time comprises:

retrieving a gaze ray (d) of the user (P) with the eye-tracking device defined in the coordinate system (ECS) of said eye tracking device, and

intersecting the gaze ray (d) of the user (P) with the screen of the computing device, as a function of the ECS and SCS parameters, to capture the gaze-on-screen in real-time.

**2.** The method according to claim 1, wherein said retrieved at least one gaze estimate (g) is a 3d ray defined in the coordinate system (ECS) of the eye tracking device and said gaze ray (d) is computed as an affine transform of said retrieved at least one gaze estimate (g).

**3.** The method according to claim 1 or 2, wherein computing the 3d pose of the screen of the computing device (SCS), further comprises the step of computing additional person-specific calibration parameters ($\theta$) for a function that maps from a gaze estimate (g) into a gaze ray (d) for the user (P).

**4.** The method according to claim 3, wherein said retrieved at least one gaze estimate (g) are gaze angles describing the eyeball rotation referred to the coordinate system (HCS) of the head of the user, and whereas mapping the at least one gaze estimate (g) into a gaze ray (d) comprises the steps of:

i) applying an affine transform from the gaze estimate (g) into corrected gaze angles (g'), whereas the affine transform is parameterized by the person-specific calibration parameters ($\theta$);

ii) transforming the corrected gaze angles (g') into a gaze vector (v');

iii) combining the gaze vector (v') with the gaze origin point (o') to define a gaze ray (d') in the coordinate system (HCS) of the head of the user;

iv) applying to the gaze ray (d') in the coordinate system (HCS) the rigid transform given by the corresponding head pose of the user, to obtain the gaze ray (d) defined in the coordinate system (ECS) of the eye tracking device

**5.** The method according to claim 3 or 4, wherein computing the person-specific calibration parameters ($\theta$), also comprises the steps:

retrieving at least one other gaze estimate (g) of at least one eye of the user from the eye tracking device, retrieving a corresponding 3d point-of-regard (q') in the coordinate system (ECS) of said eye tracking device, without depending on knowing the 3d pose of the screen of the computing device (SCS).

**6.** The method according to claim 5, wherein retrieving at least one other gaze estimate (g) and its corresponding point-of-regard (q') in the coordinate system (ECS) of the eye tracking device, comprises the step of looking at points (23) on the eye tracking device.

**7.** The method according to claim 5 or 6, wherein the process of retrieving at least one other gaze estimate (g) and its corresponding point-of-regard (q') in the coordinate system (ECS) of the eye tracking device, comprises the user looking at points on additional screens (24, 25) whose 3d pose in relation to the eye tracking device are known.

**8.** The method according to any of the preceding claims, wherein computing the 3d pose of the screen of the computing device, defined as the screen coordinate system (SCS), is also a function of an initial guess on the screen coordinate system ($SCS_{prior}$).

**9.** The method according to claim 8, wherein computing the 3d pose of the screen of the computing device, defined as the screen coordinate system (SCS), is an iterative process in which the screen coordinate system (SCS) parameters are initialized by the initial guess on the screen coordinate system ($SCS_{prior}$).

**10.** The method according to claim 8, wherein computing the 3d pose of the screen of the computing device, defined as the screen coordinate system (SCS), further includes a constraint in which the resulting screen coordinate system (SCS) is enforced to be numerically similar to the initial guess on the screen coordinate system ($SCS_{prior}$).

**11.** The method according to claims 8, 9 or 10, wherein defining the initial guess on the screen coordinate system ($SCS_{prior}$) is established in connection to guidance provided to the user on how to position the eye tracking device with respect to the screen of the computing device.

12. The method according to claims 8, 9 or 10, wherein defining the initial guess on the screen coordinate system ($SCS_{prior}$) is established based on hints provided by the user through a user interface which indicates how the user has positioned the eye tracking device in relation to the screen of the computing device.

13. The method according to claims 8, 9 or 10, wherein defining the initial guess on the screen coordinate system ($SCS_{prior}$) is further established from positional data retrieved from an inertial measurement unit (IMU).

14. The method according to claims 8, 9 or 10, wherein defining the initial guess on the screen coordinate system ($SCS_{prior}$) is further established based on face, head or body pose tracking data, and assuming that screens are oriented in the same orientation as detected faces.

15. The method according to claims 8, 9 or 10, wherein defining the initial guess on the screen coordinate system ($SCS_{prior}$) is further established from a displays layout retrieved from an operating system in multi-screen (13, 25) setups.

16. The method according to any of the preceding claims, wherein retrieving the at least one gaze estimate (g) and a corresponding point-of-regard (s; q') in the coordinate system (ECS) of the eye tracking device, comprises the step of guiding the user into moving the head as to retrieve a diverse set of gaze estimate (g) and point-of-regard (s; q') pairs.

17. The method of any of the preceding claims, wherein retrieving the corresponding point-of-regard (s) on the screen of the computing device as a 2d pixel coordinate (s) on the screen, is done in a semi-supervised or unsupervised manner.

18. The method according to any preceding claim, wherein retrieving the corresponding point-of-regard (s) on the screen of the computing device as a 2d pixel coordinate (s) on the screen, makes use of mouse clicks and other interactive events to establish a screen point to be the point-of-regard on the screen.

19. The method according to any of claims 1 to 17, wherein retrieving the corresponding point-of-regard (s) on the screen of the computing device as a 2d pixel coordinate (s) on the screen, makes use of display content to establish a screen points that are likely to be the point-of-regard on the screen, in the form of visual saliency maps.

20. The method according to any preceding claim, wherein the eye tracking device (16) is a mobile phone.

21. A tangible computer product containing program code for causing a processor to execute the method of one of the claims 1 to 19 when said code is executed on said processor.

**Fig. 1**

**Fig. 2**

**Fig. 3**

**Fig. 4**

**Fig. 5**

**Fig. 6**

**Fig. 7**

**Fig. 8**

Europäisches
Patentamt

European
Patent Office

Office européen
des brevets

## EUROPEAN SEARCH REPORT

Application Number

EP 21 15 0732

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 667 462 A1 (TOBII AB [SE]) 17 June 2020 (2020-06-17) * abstract; figure 1 * * paragraphs [0009], [0010], [0017] * * claims 1,3 * ----- | 1-15 | INV. G06F3/01 |
| X | US 6 553 281 B1 (LIU JIN [DE]) 22 April 2003 (2003-04-22) * abstract; figures 1,3 * * column 2, line 18 - line 56 * * claim 1 * ----- | 1-15 | |

TECHNICAL FIELDS
SEARCHED (IPC)

G06F

The present search report has been drawn up for all claims

| Place of search | Date of completion of the search | Examiner |
|---|---|---|
| Munich | 20 September 2021 | Pfaffelhuber, Thomas |

EPO FORM 1503 03.82 (P04C01)

## ANNEX TO THE EUROPEAN SEARCH REPORT
## ON EUROPEAN PATENT APPLICATION NO.

EP 21 15 0732

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2021

| Patent document cited in search report | | Publication date | Patent family member(s) | | Publication date |
|---|---|---|---|---|---|
| EP 3667462 | A1 | 17-06-2020 | CN 111309141 A<br>EP 3667462 A1<br>US 2020225743 A1 | | 19-06-2020<br>17-06-2020<br>16-07-2020 |
| US 6553281 | B1 | 22-04-2003 | DE 19736995 A1<br>US 6553281 B1<br>WO 9909880 A2 | | 04-03-1999<br>22-04-2003<br>04-03-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020174560 A
- WO 2020044180 A
- WO 2020208494 A
- WO 2014146199 A
- WO 2015192879 A